(19) Europäisches Patentamt
European Patent Office
Office européen des brevets

(11) **EP 4 418 011 A1**

(12) **EUROPEAN PATENT APPLICATION**

(43) Date of publication:
**21.08.2024 Bulletin 2024/34**

(21) Application number: **23157507.7**

(22) Date of filing: **20.02.2023**

(51) International Patent Classification (IPC):
**G01S 13/76** (2006.01)  **G01S 7/292** (2006.01)
**H04W 56/00** (2009.01)

(52) Cooperative Patent Classification (CPC):
**G01S 13/765**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Stichting IMEC Nederland**
**5656 AE Eindhoven (NL)**

(72) Inventors:
• **SHEIKH, Alireza**
  **5629 KH Eindhoven (NL)**
• **EL SOUSSI, Mohieddine**
  **2300 Turnhout (BE)**

(74) Representative: **AWA Sweden AB**
**Box 5117**
**200 71 Malmö (SE)**

(54) **A METHOD AND A DEVICE FOR DETERMINING TIME DURATION FOR SIGNAL PROPAGATION**

(57) A method for determining a time duration for signal propagation between a first and a second radio signal transceiver (10, 12) comprises: receiving (202) a set of measurement samples defining a time sequence representing a time duration related to propagation of a signal between the second and the first radio signal transceiver (12, 10); determining (106; 204) a rough estimate of a time instance of a pulse peak value in the measurement samples; identifying (108; 206) a subset of the measurement samples around the rough estimate; inputting (210) the subset to a fine peak estimation algorithm, wherein the subset is processed to reduce unknown phase offset; and performing (114; 212) fine peak estimation, wherein the fine peak estimation algorithm uses an estimation of a shape of a pulse peak for determining a fine estimate of the time instance based on a statistical relation between samples of the subset.

Fig. 4

**Description**

<u>Technical field</u>

The present description relates to a method and a device for determining a time duration for signal propagation. In particular, the present description relates to determining a time duration for determining a distance between a first and a second radio signal transceiver.

<u>Background</u>

Localization of devices is used in various applications, such as asset tracking, human behavior monitoring and keyless entry. Localization of devices may utilize ranging between devices, such that distances between devices are used for providing localization.

Ranging between a first radio signal transceiver and a second radio signal transceiver may be performed based on determining a time duration for signal propagation between the first and the second radio signal transceiver. The time duration for signal propagation along a line-of-sight between the first and the second radio signal transceiver may be converted to a distance between the first and the second radio signal transceiver.

Accurate ranging is needed in order to provide accurate localization of the device. However, accurate ranging is dependent on, among other factors, a sampling rate of digital signal processing used for determining the time duration for signal propagation. Thus, a high sampling rate may be needed in order to provide accurate ranging. However, a high sampling rate demands a high power consumption for ranging.

Therefore, there is a need for providing accurate ranging using a limited power consumption.

It should be realized that accurate determination of a time duration for signal propagation may be useful not only for localization of devices but may be applied in any use of signal propagation information. Thus, the signal propagation for which a time duration is determined need not even relate to a line-of-sight signal propagation. This may be utilized, e.g., for determining radio propagation characteristics in an environment.

<u>Summary</u>

An objective of the present description is to provide an accurate determination of a time duration for signal propagation between a first and a second radio signal transceiver. A particular objective of the present description is to provide the accurate determination using a limited power consumption.

This and other objectives are at least partly met by the invention as defined in the independent claims. Preferred embodiments are set out in the dependent claims.

According to a first aspect, there is provided a method for determining a time duration for signal propagation between a first and a second radio signal transceiver in relation to determining a distance between the first and the second radio signal transceiver, said method comprising: receiving a set of measurement samples defining a time sequence, wherein the set of measurement samples is acquired by signal reception by the first radio signal transceiver, said set of measurement samples representing a time duration related to propagation of a signal between the second radio signal transceiver and the first radio signal transceiver; determining a rough estimate of a time instance of a pulse peak value in the measurement samples; identifying a subset of the set of measurement samples around the rough estimate of the time instance; inputting the subset of measurement samples of the set to a fine peak estimation algorithm, wherein the subset of measurement samples are processed to reduce unknown phase offset from the subset of measurement samples; and performing fine peak estimation by the fine peak estimation algorithm, wherein the fine peak estimation algorithm uses an estimation of a shape of a pulse peak for determining a fine estimate of the time instance of the pulse peak value based on a statistical relation between samples of the subset of measurement samples.

Thanks to the method, a fine peak estimation algorithm is used which allows determining an accurate estimate of the time instance of the pulse peak value. The fine peak estimation algorithm enables using the measurement samples to provide accurate determination of the time instance of the pulse peak value, wherein accuracy of the determination is not limited by a sampling rate of the measurement samples.

Thanks to using the estimation of the shape of the pulse peak, the measurement samples may be related to the shape of the pulse peak using the statistical relation between the samples such that the time instance of the pulse peak value given sample values of the measurement samples may be accurately determined. In particular, the time instance of the pulse peak value may not necessarily correspond to a time instance of a particular measurement sample but may instead be an interpolation between samples.

Accuracy of estimation of the time instance of the pulse peak value is dependent on sampling rate of the measurement samples. However, increasing the sampling rate in order to increase accuracy of estimation highly affects power consumption for acquiring the measurement samples. Since the method may be implemented in a portable device which is typically desired to have very low power consumption, power consumption is of very high importance. Thanks to the use of the fine peak estimation algorithm, a very accurate determination of the time instance of the pulse peak value may be provided without requiring a very high sampling rate.

It should be realized that the sampling rate may still affect the accuracy of the present method. However, the use of the fine peak estimation algorithm may enable lenient requirements on the sampling rate to be used while providing a desired accuracy.

Accuracy of estimation of the time instance of the pulse peak value may also be affected by a signal-to-noise ratio (SNR) of measurement samples. Thanks to the subset of measurement samples being processed to reduce unknown phase offset, a high SNR may be provided, which may further allow accurate estimation of the time instance of the pulse peak value. The unknown phase offset may be reduced such that the phase offset does not impact the fine peak estimation.

The measurement samples may be based on one or more signals, such as radio signals, transmitted between the first radio signal transceiver and the second radio signal transceiver.

The measurement samples may be based on a first signal being transmitted from the first radio signal transceiver (which may be called an initiator) to the second radio signal transceiver (which may be called a reflector) and a second signal being transmitted in response to the first signal from the second radio signal transceiver to the first radio signal transceiver. Thus, the measurement samples may be based on a round trip of signals back and forth between the initiator and the reflector. Time instances of transmitting the signals and of receiving the signals may be recorded by the initiator and the reflector, respectively, in order to allow determining the time duration for signal propagation which may be related to the distance between the first and second radio signal transceivers. The time instances of receiving the signal at each of the reflector and the initiator may be determined using the rough estimate and the fine peak estimation.

Alternatively, the measurement samples may be based on a signal being transmitted only in one direction from the second radio signal transceiver to the first radio signal transceiver.

The second radio signal transceiver may send information to the first radio signal transceiver of a time instance of the signal being transmitted from the second radio signal transceiver in order to allow the first radio signal transceiver to determine the time duration of signal propagation.

It should also be realized that determination of the time duration may be performed by each of the first radio signal transceiver and the second radio signal transceiver. The determination may be based on round trip of signals with the first radio signal transceiver performing determination of time duration based on the first radio signal transceiver acting as initiator and the second radio signal transceiver performing determination of time duration based on the second radio signal transceiver acting as initiator. Alternatively, the determination may be based on signals propagating in only one direction, with the first radio signal transceiver determining the time duration based on a signal transmitted from the second radio signal transceiver to the first radio signal transceiver and the second radio signal transceiver determining the time duration based on a signal transmitted from the first radio signal transceiver to the second radio signal transceiver. Thus, multiple time durations may be determined which may allow even more accurate ranging.

It should further be realized that the method for determining the time duration need not necessarily be performed at any of the first or second radio signal transceivers. Rather, it may be performed in a separate device, which may be configured to receive the set of measurement samples and information of time instance(s) of transmitting signal(s) from the first or the second radio signal transceiver.

The signal may comprise a packet, which in turn may comprise multiple short pulses that are sampled and transmitted. A receiver (e.g., the first radio signal transceiver) correlates a received signal with samples of a transmitted pulse pattern in order to determine a channel impulse response (CIR). The CIR may comprise a plurality of peaks which may correspond to the signal between the second radio signal transceiver and the first radio signal transceiver following different paths (e.g., being reflected by structures, such as buildings, walls, etc., between the second and the first radio signal transceivers). The pulse peak may correspond to a peak in an impulse response of the first radio signal transceiver.

A first peak, i.e., a peak received first in time, may correspond to a signal propagation along a line-of-sight (LoS) such that the signal follows a straight path between the second radio signal transceiver and the first radio signal transceiver. The time duration of the LoS signal propagation may be directly converted to a distance between the first and the second radio signal transceiver. However, it should be realized that the first peak may not be a strongest peak in the received signal. Rather, the strongest peak may correspond to signal propagation along a non-line of sight (NLoS).

The method may be used for determining the time instance of a LoS pulse peak value and/or a NLoS pulse peak value. The time instance of the LoS pulse peak value may provide a direct relation for determining the distance between the first and the second radio signal transceiver, whereas the time instance of the NLoS pulse peak value may provide further information relating to a path taken by the signal between the first radio signal transceiver and the second radio signal transceiver.

The term "time instance of a pulse peak value" should be understood as a moment in time at which a pulse has a peak value. The term "fine peak estimation" should be understood as providing a fine estimate of the time instance of the pulse peak value, wherein the fine estimate has an improved accuracy compared to the rough estimate.

Pulse peak(s) may be identified in the set of measurement samples. Initially, a strongest peak may be identified.

This peak may be used for finding further peaks received before (or possibly after) the strongest peak is received. Then, a rough estimate of the time instance of the pulse peak value may be determined based on the peak being identified. The rough estimate may for instance correspond to a time instance of the peak value within the peak.

A subset of measurement samples corresponding to the peak or part of the peak may be used for determining the fine estimate of the time instance of the pulse peak value. The subset of measurement samples may comprise measurement samples both before and after the time instance of the pulse peak value. The subset of the measurement samples may be processed in relation to a known statistical relation between samples such that the fine estimate of the time instance may be determined. The fine estimate may be determined based on a likelihood of the time instance given the subset of the measurement samples using the known statistical relation. The known statistical relation may in turn be based on an estimation of a shape of the pulse peak.

The subset of measurement samples used for performing the fine peak estimation should be sufficiently large (correspond to a sufficient portion of the peak) to enable reliable determination of the fine estimate. However, the subset of the measurement samples should preferably be small in order to reduce processing complexity required for determining the fine estimate.

According to an embodiment, the method further comprises, after identifying the subset of the set of measurement samples, oversampling the subset of measurement samples to generate an increased number of measurement samples in the subset.

The oversampling of the subset of measurement samples generates additional measurement samples in the subset. The oversampling may also be referred to as up-sampling of the subset of measurement samples.

The increased number of measurement samples may be utilized in order to improve accuracy of determination of the time instance of the pulse peak value. However, the oversampling of the subset of measurement samples also increases processing complexity.

Thanks to the use of the fine peak estimation algorithm, the time instance of the pulse peak value may be accurately determined with lenient requirements on sampling rate and an oversampling factor. Thus, the method may utilize oversampling using a relatively low oversampling factor compared to methods not using the fine peak estimation algorithm, wherein the estimation of the shape of the pulse peak is used for determining the fine estimate.

According to an embodiment, said oversampling comprises performing a Fast Fourier Transform (FFT) on the subset of measurement samples to generate an FFT representation of the subset, zero padding of the FFT representation, and performing an inverse FFT to output an increased number of measurement samples of the subset.

This is an efficient manner of generating an increased number of measurement samples.

According to an embodiment, an oversampling factor used in the zero padding is smaller than 10, such as smaller than 5, such as 2.

oversampling factor controls the number of measurement samples that will be used in further processing for determining the time instance of the pulse peak value. Thus, using a high oversampling factor increases processing complexity and hence power consumption of the processing.

Thanks to the use of the estimation of the shape of the pulse peak is for determining the fine estimate of the time instance of the pulse peak value, a relatively small oversampling factor may be used.

According to an embodiment, the set of measurement samples are formed based on a cross correlation between a received signal and a reference signal, wherein the set of measurement samples are processed based on an absolute value of the cross correlation for reducing the unknown phase offset.

The reference signal may define a pattern of symbols that are transmitted in the signal. For instance, a pattern of symbols of different values corresponding to different pulses in the signal may be used. The cross correlation between the received signal and the reference signal may thus provide an indication of how well the received signal matches the reference signal at a particular time instance. This cross correlation may thus be used for forming the set of measurement samples.

Using the reference signal, it may thus be possible to accurately identify when a signal transmitted by one of the radio signal transceivers (e.g., the second radio signal transceiver) is received by the other of the radio signal transceivers (e.g., the first radio signal transceiver).

The signals transmitted from the radio signal transceiver (e.g., the second radio signal transceiver) comprises pulses of real values. However, due to unknown phase offset, such as residual carrier frequency offset (CFO) after CFO compensation, the received values are complex comprising a real and an imaginary value.

Thanks to the absolute value of the cross correlation being used, an effect of the unknown phase offset may be removed or at least reduced so as to improve SNR of the measurement samples and improve determination of the time instance of the pulse peak value.

The measurement samples being processed based on an absolute value should be construed as a function using the absolute value is used. This function may for instance be using the absolute value of the cross correlation or using a square of the absolute value of the cross correlation.

According to an embodiment, the set of measurement samples are processed based on the absolute value after identifying the subset of the set of measurement samples and before performing fine peak estimation.

This implies that any oversampling of the subset of measurement samples which has not been processed based on the absolute value. In other words, the oversampling may be performed on a complex-valued CIR level. This may provide a better accuracy in determining the time instance of the pulse peak value compared to using oversampling on subset of measurement samples that have been processed based on the absolute value.

According to an alternative embodiment, the set of measurement samples are processed based on the absolute value before identifying the subset of the set of measurement samples.

The set of measurement samples processed based on the absolute value may be utilized in finding a peak, such as when using a leading-edge algorithm for finding the peak. Thus, the set of measurement samples may anyway need to be processed based on the absolute value before identifying the subset of the set of measurement samples and before any oversampling. By using the set of measurement samples being processed based on the absolute value as input to the identifying of the subset and any oversampling, the processing of measurement samples based on the absolute value need only be performed once. However, accuracy in determining the time instance of the pulse peak value may be slightly worse compared to using oversampling on the subset of measurement samples which was processed based on the complex values.

According to an embodiment, a covariance of noise in the cross correlation between the received signal and the reference signal is approximated such that covariance of colored noise is independent on a transmitter pulse shape.

The covariance of noise may be utilized in the statistical relation between the samples of the subset of measurement samples. It is realized that the covariance of noise may be approximated to be independent on a transmitter pulse shape and to only depend on a receiver pulse shape.

The transmitter pulse shape may not be known by the radio signal transceiver receiving the signal. Thus, by utilizing covariance of noise independent on the transmitter pulse shape, the radio signal transceiver that receives a signal may determine the fine estimate of the time instance of the pulse peak value using the statistical relation between samples that takes a covariance of noise into account.

According to an embodiment, a size of the subset of measurement samples is based on tradeoff between accurate finding of peak and processing complexity.

It should be realized that a large size of the subset of measurement samples may imply that the time instance of the pulse peak value may be accurately determined, while it may also imply that high power consumption is required for processing the measurement samples to determine the time instance of the pulse peak value.

According to an embodiment, measurement samples corresponding to 3 ns before a rough estimate of the pulse peak value to 3 ns after a rough estimate of the pulse peak value may be utilized in the subset of measurement samples. This may correspond to 3 samples before and after the rough estimate of the pulse peak value (if sampling at a rate of 1 sample per ns). These measurement samples may then be further oversampled in order to generate an increased number of measurement samples. Such size of the subset may be sufficient to provide a very accurate determination of the time instance of the pulse peak value.

According to an embodiment, the rough estimate of the time instance of a first pulse peak value is determined using a leading-edge algorithm based on detection of a non-first peak.

A strongest peak in the set of measurement samples need not correspond to a LoS propagation of a signal. However, the strongest peak may be easily identified. The method may therefore use the leading-edge algorithm to identify the first pulse peak, which corresponds to LoS propagation. The first pulse peak may then be utilized to determine the distance between the first radio signal transceiver and the second radio signal transceiver.

However, it should be realized that the measurement samples may in some embodiments only comprise a single peak corresponding to LoS propagation. In such case, the leading-edge algorithm may not be needed for determining the rough estimate of the first pulse peak.

According to another embodiment, the rough estimate of the time instance of the pulse peak value is determined based on identifying a pulse peak in the set of measurement samples.

Thus, the rough estimate may be based on identifying a strongest value in the set of measurement samples. The time instance of the pulse peak value may then represent a NLoS propagation of the signal. This may be utilized together with determination of the time instance of the first pulse peak value to provide further information of paths taken by the signal between the first radio signal transceiver and the second radio signal transceiver.

According to an embodiment, the measurement samples of the set of measurement samples correspond to combining measurement samples based on multiple receiver chains between the first radio signal transceiver and the second radio signal transceiver.

The first and/or the second radio signal transceiver may comprise a plurality of antennas, wherein each antenna may be connected to a receiver chain. Thus, the signal from the second radio signal transceiver to the first radio signal transceiver may be received by a plurality of antennas of the first radio signal transceiver such that the signal is received in multiple receiver chains in the first radio signal transceiver. The multiple receiver chains may be used for improving detection of the signal by improving SNR.

The measurement samples may be formed by combining information received in the multiple receiver chains. For instance, the measurement samples may be based on forming an average of the multiple receiver chains. However, it should be realized that other combinations may be used.

According to an embodiment, the performing of the fine peak estimation uses a maximum likelihood estimation by maximizing a probability density function between the samples of the subset of measurement samples and the shape of the pulse peak.

This implies that the fine peak estimation algorithm may be used for determining a time instance of the pulse peak value corresponding to a maximum probability of the time instance given the samples of the subset of measurement samples.

According to a second aspect, there is provided a computer program product comprising computer-readable instructions such that when executed on a processing unit the computer program product will cause the processing unit to perform the method according to the first aspect.

Effects and features of this second aspect are largely analogous to those described above in connection with the first aspect. Embodiments mentioned in relation to the first aspect are largely compatible with the second aspect.

The computer program product may thus provide computer-readable instructions for allowing the method to be implemented. This allows the functionality of the method to be provided to any processing unit.

The computer program product may comprise a non-transient computer-readable medium for carrying the computer-readable instructions. Alternatively, the computer program product may comprise a signal carrying the computer-readable instructions, e.g., for communicating the computer program product to the processing unit through wired or wireless communication.

According to a third aspect, there is provided a device for determining a time duration for signal propagation between a first and a second radio signal transceiver in relation to determining a distance between the first and the second radio signal transceiver, said device comprising a processing unit configured to: receive a set of measurement samples defining a time sequence, wherein the set of measurement samples is acquired by signal reception by the first radio signal transceiver, said set of measurement samples representing a time duration related to propagation of a signal between the second radio signal transceiver and the first radio signal transceiver; determine a rough estimate of a time instance of a pulse peak value in the measurement samples; identify a subset of the set of measurement samples around the rough estimate of the time instance; input the subset of measurement samples of the set to a fine peak estimation algorithm, wherein the subset of measurement samples are processed to reduce unknown phase offset from the subset of measurement samples; and perform fine peak estimation by the fine peak estimation algorithm, wherein the fine peak estimation algorithm uses an estimation of a shape of a pulse peak for determining a fine estimate of the time instance of the pulse peak value based on a statistical relation between samples of the subset of measurement samples.

Effects and features of this third aspect are largely analogous to those described above in connection with the first, and second aspects. Embodiments mentioned in relation to the first, and second aspects are largely compatible with the third aspect.

The device may be part of the first radio signal transceiver or the second radio signal transceiver. However, the device may alternatively be arranged external to the first and second radio signal transceiver and may be configured to receive the set of measurement samples from the first and/or second radio signal transceiver.

The processing unit may be implemented as a general-purpose processing unit, such as a central processing unit (CPU), which may execute instructions of one or more computer programs in order to implement appropriate functionality. However, the processing unit may alternatively be implemented as firmware arranged, e.g., in an embedded system, or as a specifically designed processing unit, such as an Application-Specific Integrated Circuit (ASIC) or a Field-Programmable Gate Array (FPGA).

Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.

Fig. 1 is a schematic view of signal transmission between a first and a second radio signal transceiver.
Fig. 2 is a schematic view of values of a set of measurement samples of signal transmission.
Fig. 3 is a schematic view of fine peak estimation using estimation of shape of a pulse peak.
Fig. 4 is a schematic view of a method for estimation of time instance of a pulse peak value according to a first embodiment.
Fig. 5 is a schematic view of a method for estimation of time instance of a pulse peak value according to a second embodiment.
Figs 6-8 are graphs illustrating results of simulations.

Fig. 9 is a flow chart of a method according to an embodiment.
Fig. 10 is a schematic view of a device according to an embodiment.

Detailed description

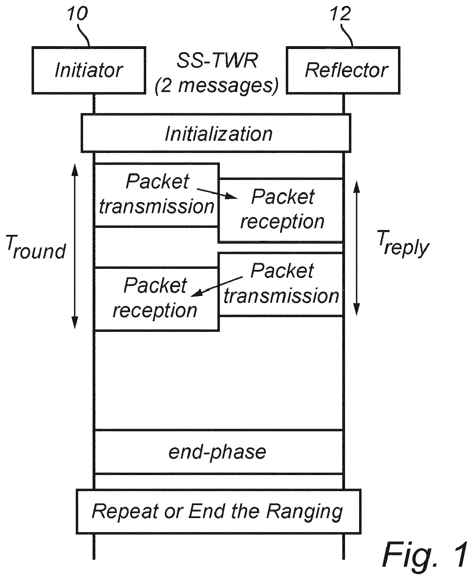

Referring now to Fig. 1, transmission of radio signals between a first radio signal transceiver 10 and a second radio signal transceiver 12 for ranging will be described. It should be realized that the transmission of radio signals illustrated in Fig. 1 is commonly used but other procedures could be used for ranging.

The transmission of signals illustrated in Fig. 1 may be referred to as two-way ranging. The procedure of range estimation may for instance be provided using ultra-wideband (UWB) communication.

The two-way ranging involves a first signal (a first packet) being transmitted from the first radio signal transceiver 10 to the second radio signal transceiver 12 and a second signal (a second packet) being transmitted back from the second radio signal transceiver 12 to the first radio signal transceiver 10. A time duration between a moment of transmission of the first packet from the first radio signal transceiver 10 and a moment of reception of the second packet by the first radio signal transceiver 10 may be referred to as a roundtrip time $T_{round}$. The roundtrip time includes a reply time $T_{reply}$ which is the time duration between a moment of reception of the first packet by the second radio signal transceiver 12 and a moment of transmission of the second packet by the second radio signal transceiver 12.

A time-of-flight $ToF$ of signals between the first radio signal transceiver 10 and the second radio signal transceiver 12 may be computed as $ToF = (T_{round} - T_{reply})/2$. The time-of-flight may further be converted to a distance between the first radio signal transceiver 10 and the second radio signal transceiver 12.

The time instance of the reception of the signal by the first radio signal transceiver 10 and the second radio signal transceiver 12 needs to be accurately determined in order to allow the distance between the first radio signal transceiver 10 and the second radio signal transceiver 12 to be accurately determined.

The signals received by the radio signal transceivers may be cross-correlated to a reference signal. The transmitted signal (packet) may comprise a plurality of short pulses (corresponding to symbols). The received signal may then be cross-correlated to the reference signal which provides a pattern of pulses (symbols) that defines the pulses used in transmitting of the signal.

For instance, the transmitted signal may define a sequence of symbols -1, 0, and 1, wherein -1 is represented by a short negative pulse, 1 is represented by a short positive pulse and 0 is represented by a zero value of the signal. The reference signal may provide a corresponding representation of the sequence of symbols defining a signal that is expected to be received. The cross correlation between the received signal and the reference signal may thus provide an indication of how well the received signal matches the reference signal in order to provide information of when the signal is received.

The cross correlation between the received signal and the reference signal may, for instance, be determined by shifting the reference signal through the received signal and, for each shift, values of the reference signal and the receive signal are multiplied and then summed. When such cross correlation is computed, a maximum of the cross correlation is provided when the received signal and the shifted reference signal are matched. Such maximum will occur when the reference signal is shifted by a delay introduced by a channel in which the signal is transmitted. Therefore, a peak of the cross correlation may be an indicator of the time instance of receipt of the signal and, hence, an indication of a range between the first radio signal transceiver 10 and the second radio signal transceiver 12.

The cross correlation of the received signal and the reference signal may be referred to as a channel impulse response (CIR).

For determining a time instance of receipt of a signal, a set of measurement samples may be formed. The set of measurement samples may correspond to CIR samples. The set of measurement samples may define a time sequence of values indicating reception of the transmitted signal. A time instance of peak (maximum) values in the set of measurement samples may thus indicate a reception of the signal in the radio signal transceiver 10, 12.

It should be realized that although the above description is given for two-way ranging, a signal may only be transmitted in one direction. This may also involve sharing further information between the first and radio signal transceiver 10, 12, e.g., for clock synchronization, in order to allow the time duration for signal propagation to be determined. Also, ranging may involve determining a time duration for signal propagation by the first and second radio signal transceivers 10, 12 changing roles, such that the time duration may be determined based on transmitting the signal from the first radio signal transceiver 10 to the second radio signal transceiver 12 and based on transmitting the signal from the second radio signal transceiver 12 to the first radio signal transceiver 10. Also, time durations may be determined based on the first radio signal transceiver 10 and the second radio signal transceiver 12 changing roles (initiator, reflector) in two-way ranging. By using at least two determinations of time durations, a more accurate determination of the range between the first radio signal transceiver 10 and the second radio signal transceiver 12 may be achieved.

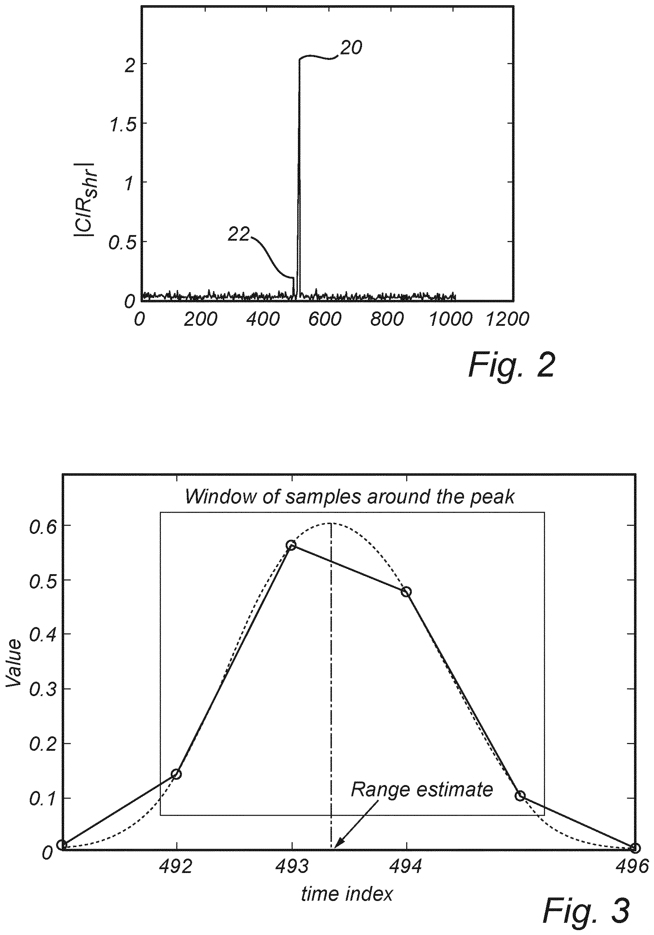

Referring now to Fig. 2, the set of measurement samples (CIR) may provide a strongest peak that does not correspond to a line-of-sight (LoS) path between the first radio signal transceiver 10 and the second radio signal transceiver 12.

When the set of measurement samples is received, the strongest peak 20 may be clearly detected based on the maximum value of the measurement samples. A peak value 22 corresponding to a first path (LoS path) may be determined based on a search for peaks within the time sequence before the strongest peak 20.

The time instance of a peak value of a pulse (hereinafter called pulse peak value) may be accurately determined as described in further detail below. The set of measurement samples may be used for finding the pulse peak corresponding to the LoS path but may also or alternatively be used for finding a pulse peak corresponding to a non-line-of-sight (NLoS) peak. The time instance of the first pulse peak value (LoS path) provides information relating to the LoS propagation of the signal which may be directly converted to a range between the first radio signal transceiver 10 and the second radio signal transceiver 12. The time instance of a second (or further) pulse peak value correspond to a NLoS path and may provide further information of the path in which the signal propagates (including reflections of the signal by structures in an environment of the radio signal transceivers).

The time instance of the pulse peak value may be used in combination with a known time of transmitting of the signal to provide a time duration for propagation of the signal. Thus, by accurately determining the time instance of the pulse peak value, the time duration for propagation of the signal may be accurately determined.

Accuracy of determining the time instance of the pulse peak value may depend on a signal-to-noise ratio and a sampling rate for the received signal. However, increasing a sampling rate implies that a power consumption for processing the received signal increases. Thus, in order to allow ranging to be performed for low-power devices, the sampling rate should not be too high. Further, for a typical UWB radio signal transceiver, a sampling rate of 1 GHz may be used. This corresponds to a time resolution of 1 ns, which translates to a ranging error ±15 cm.

Below, processing of the set of measurement samples for enabling use of a higher accuracy than a limit based on the sampling rate will be described.

Referring now to Fig. 3, fine peak estimation by a fine peak estimation algorithm may be performed for providing a highly accurate determination of the time instance of the pulse peak value.

The fine peak estimation algorithm may utilize a plurality of measurement samples. The fine peak estimation algorithm does not merely determine a time instance of a specific sample having a peak value but may rather provide an interpolation for determining a time instance which may be in-between the time instances of specific samples.

Thus, the fine peak estimation utilizes a plurality of measurement samples around a peak value. A subset of measurement samples corresponding to samples around the peak value may be extracted from the set of measurement samples such that the fine peak estimation algorithm may utilize the subset of measurement samples for determining the fine estimate of the time instance of the pulse peak value.

The fine peak estimation algorithm may further utilize other information in order to allow accurate interpolation for determining the time instance of the pulse peak value. The fine peak estimation algorithm may use an estimation of a shape of the pulse peak and may use a statistical relation between the samples such that the time instance of the pulse peak value given sample values of the measurement samples may be accurately determined.

As illustrated in Fig. 3, values of the subset of measurement samples (indicated by a solid line) may be compared to the estimation of the shape of the pulse peak (indicated by a dashed line) such that the time instance of the pulse peak value may be accurately determined.

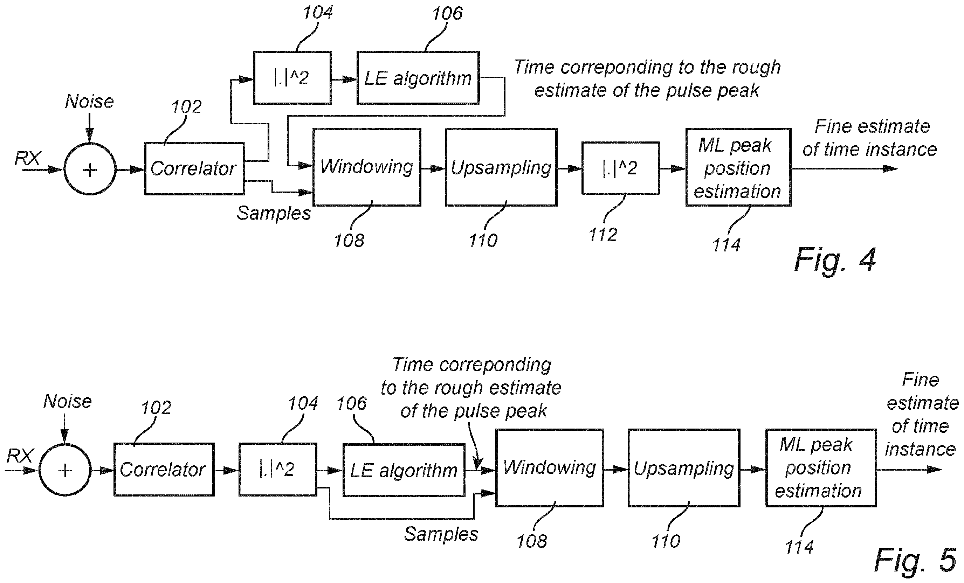

Referring now to Fig. 4, the estimation of the time instance of the pulse peak value in the measurement samples will be described in further detail.

Fig. 4 shows a received signal RX received by a radio signal transceiver, e.g., the first radio signal transceiver 10. Fig. 4 also illustrates that noise $n(t)$ ($t$ indicating a variation over time) is received. Thus, received input is a mix of the received signal with noise.

The received signal (with noise) may be represented as a time sequence of samples. The received signal is provided to a correlator 102. The correlator 102 is configured to perform a cross correlation between the received signal and a reference signal. As described above, this may represent CIR samples of the transmitted signal forming a set of measurement samples.

The set of measurement samples may be processed based on an absolute value of the cross correlation. As shown in Fig. 4, a computation process 104 may compute an absolute square of the set of measurement samples. As an alternative, absolute values of the set of measurement samples may be used or another function of absolute values of the set of measurement samples may be used. However, in the following, the processing of the set of measurement samples is discussed based on use of the absolute square of the set of measurement samples.

The set of measurement samples may be processed, e.g., based on the absolute square operation, to remove or at least reduce unknown phase offset from the set of measurement samples. The processing of the measurement samples based on the absolute square operation may thus improve signal-to-noise ratio of the measurement samples. Although pulses of a transmitted signal are real values, the received signal may have complex values. In particular, after carrier frequency offset compensation, residual carrier frequency offset may provide unknown phase offset which comprises complex values. Thus, by utilizing the absolute square operation, signal-to-noise ratio may be improved.

The set of measurement samples output by the computation process 104 may be used for determining a rough estimate of a time instance of a pulse peak value. The set of measurement samples may thus be used for identifying a strongest pulse peak. A maximum value among the set of measurement samples may be thus be determined and used for identifying the time instance of the strongest pulse peak. Further processing may be performed to identify further peaks. For instance, a leading-edge algorithm 106 may be used for detecting a first peak in the set of measurement samples based on a detection of a non-first peak. Then, a rough estimate of the time instance of the pulse peak value may be determined as the time instance corresponding to the measurement sample among the set of measurement samples identified as a peak value of a pulse.

The set of measurement samples and the rough estimate of the time instance of the pulse peak value may be input to a process for determining a fine estimation of the time instance of the pulse peak value. First, a subset of the set of measurement samples around the rough estimate of the time instance may be identified. This may be performed, for instance, by a windowing process 108, which may be configured to select the subset of the set of measurement samples around the rough estimate.

The windowing process 108 may be configured to select a default number of samples around the rough estimate. For instance, samples corresponding to 3 ns before the rough estimate to 3 ns after the rough estimate may be used. With a sampling rate of 1 GHz, this would correspond to selecting 7 samples. However, it should be realized that fewer or more samples could be used. Selecting a larger number of samples may provide a more accurate determination of the time instance of the pulse peak value. However, processing complexity would increase with a larger number of samples. Further, samples closest to the rough estimate of the time instance may contribute most to the accuracy of determining the fine estimate of the time instance.

Thus, a size of the subset of measurement samples may be based on tradeoff between accurate finding of the fine estimate of the time instance of the pulse peak value and processing complexity. In order to limit the power consumption for processing the subset of measurement samples, the size of the subset may be low, such as 5 samples, while still enabling the fine estimate to be determined with a high accuracy.

The subset of measurement samples may be input to an oversampling process 110 for oversampling the subset of measurement samples to generate an increased number of measurement samples in the subset. The oversampling improves accuracy of the estimation of the time instance of the pulse peak value. However, oversampling also increases processing complexity in that processing complexity (and hence, power consumption) of the oversampling process 110 is dependent on to which extent the number of measurement samples in the subset is increased.

The oversampling may comprise performing a Fast Fourier Transform (FFT) on the subset of measurement samples to generate an FFT representation of the subset, zero padding of the FFT representation, and performing an inverse FFT to output the increased number of measurement samples of the subset.

The zero padding may add $(M-1)*W/2$ zeros at beginning and end of the FFT representation, where $M$ is an oversampling factor and $W$ is a window size (number of samples in the subset before FFT is performed).

Thanks to the use of the fine peak estimation algorithm, the number of measurement samples needed for providing a high accuracy of the fine estimation of the time instance of the pulse peak value is not very large. Therefore, it may not be necessary to use the oversampling process 110 at all. If the oversampling process 110 is used, a relatively small oversampling factor $M$ may be used, such as using an oversampling factor $M$ smaller than 10, or smaller than 5. In an embodiment, the oversampling factor may be set to $M = 2$.

As shown in Fig. 4, the rough estimate of the time instance of the pulse peak value may be determined based on the set of measurement samples output by the computation process 104. That is, the set of measurement samples are processed based on using an absolute value. However, the windowing process 108 may be configured to receive the set of measurement samples from the correlator 102 together with the rough estimate of the time instance of the pulse peak value.

This implies that oversampling of the subset may be performed on CIR level, i.e., measurement samples that have not been processed based on the absolute value of the cross correlation between the received signal and the reference signal.

As further shown in Fig. 4, the set of measurement samples output by the oversampling process 110 (or by the windowing process 108, if no oversampling is performed) may be processed based on an absolute value of the cross correlation. Thus, a computation process 112 may compute an absolute square of the set of measurement samples. As an alternative, absolute values of the set of measurement samples may be used or another function of absolute values of the set of measurement samples may be used.

The subset of measurement samples output by the computation process 112 may thereafter be input to the fine peak estimation algorithm 114 for determining a fine estimate of the time instance of the pulse peak value. Thus, the set of measurement samples may be processed based on the absolute value after identifying the subset of the set of measurement samples and before performing fine peak estimation.

Possibly, the rough estimate of the time instance of the pulse peak value may be determined based on the set of measurement samples output by the correlator 102, without utilizing the computation process 104. If so, it would only be required to perform the absolute value processing (e.g., absolute squared computation) on the subset of the measurement samples.

Referring now to Fig. 5, the windowing process 108 may according to an alternative receive the set of measurement samples output by the computation process 104. In such case, the identifying of the subset of measurement samples and oversampling of the subset of measurement samples (if used) may be performed on absolute squared CIR level, i.e., measurement samples that have been processed based on the absolute value of the cross correlation between the received signal and the reference signal.

In this case, the computation process 112 need not be performed, since the absolute square operation has already been performed on the entire set of measurement samples input to the windowing process 108. Thus, the subset of measurement samples input to the fine peak algorithm is anyway, without the computation process 112, processed based on the absolute value.

The estimation of the time instance of the pulse peak value may be slightly more accurate using an oversampling at CIR level as shown in Fig. 4 compared to using an oversampling at absolute squared CIR level as shown in Fig. 5. Thus, the processing illustrated in Fig. 4 may be preferred even though it may involve an extra step in the computation process 112.

The fine peak estimation algorithm 114 may find the fine estimate of the time instance of the pulse peak value using noisy samples of the signal, such as the CIR samples, wherein the samples are provided with a regular period. The fine peak estimation algorithm may use statistics of the set of measurement samples to accurately find the fine estimate. The use of statistics of the noisy samples will now be described in more detail.

The output of the correlator 102 for a channel with delay $\tau$ may be defined as:

$$g(v - \tau)e^{j\theta(v)} + z(v),$$

where $g(v)$ is a function of the transmit and receive pulses, given as:

$$g(v) = \int_{-\infty}^{+\infty} S_{TX}(t)S_{RX}(t - v)dt,$$

with $S_{TX}(t)$ being an overall pulse shaped from the transmitter to the receiver forming a received signal and $S_{RX}(t - v)$ being a reference signal forming a receiver filter;
and where $z(v)$ is colored noise depending on the receiver filter, given as:

$$z(v) = \int_{-\infty}^{+\infty} n(t)S_{RX}(t - v)dt,$$

where n(t) is independent and identically distributed Gaussian noise with variance of $N_0$;
and where $\theta(v)$ is an unknown phase shift, which may be due to residual carrier frequency offset which may not be compensated for;
and where $v$ is a time instance of received signal after correlation and $\tau$ is a delay of propagation of the signal from the transmitter to the receiver.

A covariance of the noise $z(v)$ can be written as:

$$cov(z(v)) = \mathbb{E}(z(v)z^*(v')) = N_0 g_{RX}(v - v'),$$

where $\mathbb{E}(.)$ is the expectation function, * stands for the conjugate operation and $g_{RX}(v)$ is auto-correlation of the pulse shape of the receiver filter given by:

$$g_{RX}(v) = \int_{-\infty}^{+\infty} S_{RX}(t)S_{RX}(t-v)dt.$$

The absolute square of the output from the correlator 102 may be called written as:

$$h(v) = \left| g(v-\tau)e^{j\theta(v)} + z(v) \right|^2 =$$
$$= \left( g(v-\tau) \right)^2 + 2g(v-\tau)\left( \cos\left(\theta(v)\right)z_I(v) + \sin\left(\theta(v)\right)z_Q(v) \right) + z(v)z^*(v),$$

where $z_I(v)$ and $z_Q(v)$ are real and imaginary values, respectively, of $z(v)$.

Due to the absolute squared operation, there is a term $2g(v - \tau)(\cos(\theta(v))z_I(v) + \sin(\theta(v))z_Q(v))$ which depends on both signal and noise. The terms related to noise are defined as $\tilde{z}(v)$:

$$\tilde{z}(v) = 2g(v-\tau)\left( \cos\left(\theta(v)\right)z_I(v) + \sin\left(\theta(v)\right)z_Q(v) \right) + z(v)z^*(v),$$

which may be approximated with a Gaussian distribution.

The covariance of $\tilde{z}(v)$ may be computed as:

$$cov\left( \tilde{z}(v) \right) = 4N_0 g_{RX}(v-v')g(v-\tau) + 3N_0^2 K_{RX}(v-v') - N_0^2 g_{RX}^2(0),$$

where

$$K_{RX}(v) = \int_{-\infty}^{+\infty} S_{RX}{}^2(t)S_{RX}{}^2(t-v)dt.$$

It may be shown that the first term is much smaller than the following terms, such that the covariance of $\tilde{z}(v)$ may be simplified as:

$$cov\left( \tilde{z}(v) \right) = 3N_0^2 K_{RX}(v-v') - N_0^2 g_{RX}^2(0).$$

This approximation makes the covariance $cov(\tilde{z}(v))$ solely dependent on receiver pulse shape. That is, the covariance is independent of $g(v - \tau)$ which depends on transmitter pulse shape. Based on the expression above, the covariance matrix $V_{\tilde{z}}$ of the colored noise may be written as:

$$V_{\tilde{z}} = N_0{}^2 \begin{pmatrix} 3K_{RX}(0)\text{-}g_{RX}^2(0) & 3K_{RX}(T)\text{-}g_{RX}^2(0) & \dots & 3K_{RX}\left((Z\text{-}1)T\right)\text{-}g_{RX}^2(0) \\ 3K_{RX}(\text{-}T)\text{-}g_{RX}^2(0) & 3K_{RX}(0)\text{-}g_{RX}^2(0) & \cdots & 3K_{RX}\left((Z\text{-}2)T\right)\text{-}g_{RX}^2(0) \\ \vdots & \vdots & \dots & \vdots \\ 3K_{RX}(\text{-}(Z\text{-}1)T)\text{-}g_{RX}^2(0) & 3K_{RX}(\text{-}(Z)T)\text{-}g_{RX}^2(0) & \cdots & 3K_{RX}(0)\text{-}g_{RX}^2(0) \end{pmatrix},$$

where Z is the size of the subset of measurement samples and T is a period between subsequent samples.

The derived statistics of the covariance of noise in the signal may be used in accurately determining the fine estimate of the time instance of the pulse peak value. The fine peak estimation algorithm may determine a maximum likelihood estimate of the time instance of the pulse peak value given the noisy samples.

Using m as an index of a sample and information of the rough estimate of the pulse peak value from the leading edge algorithm, the subset of Z samples at sampling times $t_m, ..., t_{m+z}$ will contain a local maximum corresponding to the pulse peak value. The time instance of the local maximum may be referred to as $t_{maxLE}$. The value of m for the local maximum may then be given as:

$$m = \underset{s}{\operatorname{argmax}} \sum_{i=0}^{Z-1} h(t_{s+i}), t_{\max LE} \in \{t_{s+i}\}.$$

The following notations are used below:

$$t_Z = [t_m, \ldots, t_{m+Z-1}]^T$$

$$h_Z = [h(t_m), \ldots, h(t_{m+Z-1})]^T$$

$$g(t_Z - \tau) = [g(t_m - \tau), \ldots, g(t_{m+Z-1} - \tau)]^T.$$

The maximum likelihood estimation of the time instance of the pulse peak value, referred to as $\tau_{est}$, can be computed by maximizing the probability density function of getting samples with values of $h_Z$ at the CIR absolute squared level given knowledge about transmit and receive pulses used. That is the maximum likelihood estimation may be given as:

$$\tau_{est} = \underset{\tau}{\operatorname{argmax}} P(h_Z | g(t_Z - \tau)),$$

which may be expressed as:

$$\tau_{est} = \underset{\tau}{\operatorname{argmin}} \left( (g(t_Z - \tau))^T V_Z^{-1} g(t_Z - \tau) - 2(g(t_Z - \tau))^T V_Z^{-1} h_Z \right).$$

Tests have shown that the term

$$(g(t_Z - \tau))^T V_Z^{-1} g(t_Z - \tau)$$

may be neglected without loss in performance of determining the fine estimate of the time instance of the pulse peak value. Thus, the maximum likelihood estimation may be simplified as:

$$\tau_{est} = \underset{\tau}{\operatorname{argmax}} \left( (g(t_Z - \tau))^T V_Z^{-1} h_Z \right). \qquad (1)$$

The shape of the absolute squared CIR samples around the rough estimate of the time instance of the pulse peak value may be modeled as a general second order function, i.e., $g(v) = c - a(v - b)^2$. Such approximation is valid for narrow pulses, such as pulses used for instance in UWB transmissions.

Using the approximation, a closed form expression for $\tau_{est}$ is given as:

$$\tau_{est} = \frac{t_Z^T V_{\tilde{Z}}^{-1} h_{\tilde{Z}}}{1^T V_{\tilde{Z}}^{-1} h_{\tilde{Z}}} - b. \qquad (2)$$

The closed-form solution of equation (2) is computed based on taking the derivate of the Lagrange function of equation (1). In equation (2), the term $V_Z^{-1}$ is both in nominator and denominator. Therefore, the constant value of $N_0^2$ can be canceled out. This implies that the fine estimate $\tau_{est}$ of the time instance of the pulse peak value is independent of estimation of $N_0$, i.e., the variance of noise before the correlator 102.

The closed-form solution of equation (2) depends on a constant value $b$, which depends on the shape of transmitter and receiver pulses, i.e., $g(v)$. However, if the initiator and reflector roles are interchanged between the first radio signal transceiver 10 and the second radio signal transceiver 12, this constant may be canceled out in computation of the time-of-flight (ToF) duration of a signal propagating between the transceivers. This implies that the ToF is independent of the information about the shape of the transmitter pulse. This is particularly important if the pulse shape of the transmitter is not known to the receiver, which may be the case if the first and second radio signal transceivers 10, 12 are not from a common vendor.

The time instance of the pulse peak value may be determined for a LoS path but may also be determined for a NLoS path. The time instances for NLoS peaks may be useful for mitigating the impact of multipath components on the time instance of LoS peaks. Thus, the accuracy of determining the LoS path may be further improved by accurately determining the time instances of the pulse peak values both for the first LoS pulse peak and for further NLoS pulse peaks.

The first radio signal transceiver 10 and/or the second radio signal transceiver 12 may comprise a plurality of antennas defining multiple receiver chains. The multiple receiver chains may further be used for improving accuracy of determining the range between the radio signal transceivers 10, 12. For instance, the multiple receiver chains may be used for combining measurement samples from multiple receiver chains for improving SNR. One way of utilizing the multiple receiver chains is to compute an average of CIR samples from each receiver chain and then apply the estimation of the time instance of pulse peak values described above directly to the averaged CIR samples.

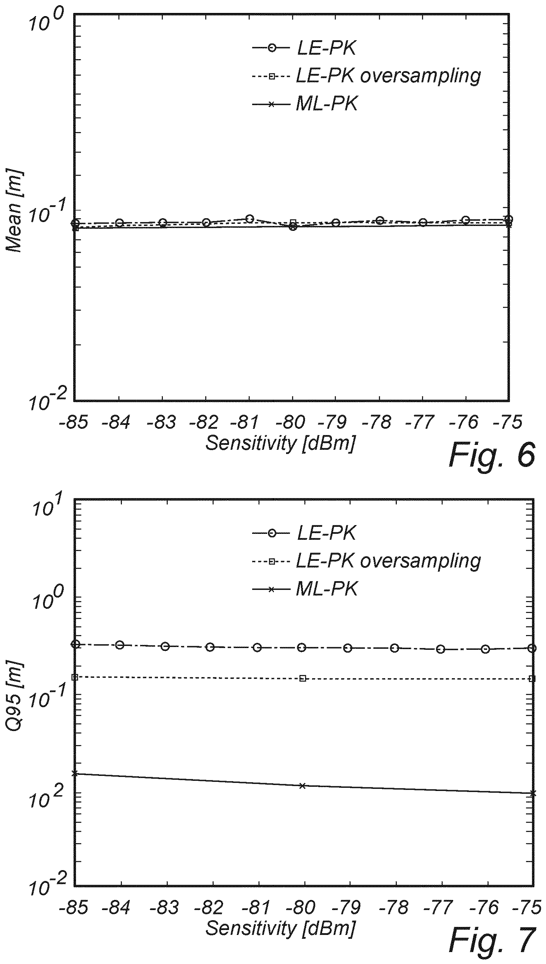

Referring now to Figs 6-8, results of simulations will be discussed. In simulations, performance of range estimation (referred to as "ML-PK") based on the above-described scheme illustrated in Fig. 4 is analyzed using an UWB simulator in a single path additive white Gaussian noise channel. The performance is compared to a scheme solely using a leading-edge algorithm to identify peaks (the output from the leading-edge algorithm 106, referred to as "LE-PK") and a scheme using oversampling (the output from the oversampling process 110, referred to as "LE-PK oversampling"). A sampling rate of 1 GHz is used for all schemes and the oversampling factor is set to $M = 2$ for both the ML-PK and the LE-PK oversampling schemes.

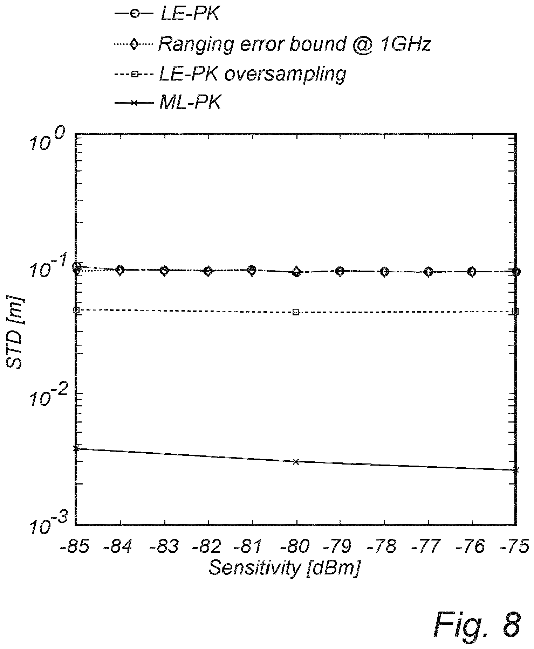

In Figs 6-8, mean, Q95, and standard deviation (STD) of ranging error for ML-PK, LE-PK, and LE-PK oversampling schemes is shown for various receiver sensitivity levels. Also, a Cramér-Rao lower bound of STD of ranging error is illustrated in Fig. 8. For the receiver sensitivity levels that are shown in Figs 6-8, the lower bound is mainly dominated by the sampling error and not the contribution of the noise. In fact, the error of the sampling is uniformly distributed in the interval of [-500ps, 500ps], which corresponds to the STD of 8.6 cm. Furthermore, the lower bound on the STD of ranging error is a limit for LE-PK scheme and not a limit for the ML-PK scheme. This is because employing the interpolation as used in the ML-PK scheme violates the assumption of sampling in the uniform grid that is a foundation for the lower bound.

The STD of the LE-PK scheme and LE-PK oversampling scheme in sensitivity of -75 dBm is 8.6 cm and 4.3 cm, respectively. The ML-PK scheme improves the ranging accuracy down to 2.7 mm. It may be computed that in the LE-PK scheme, in order to acheive STD of 2.7mm, it is required to perform sampling at 33GHz, which is very hardware demanding. However, the our proposed scheme acheives 2.7mm STD of ranging error at sampling rate of 2 GHz (sampling at 1 GHz and using an oversampling factor of $M = 2$). Furthermore, Q95 of the LE-PK scheme and the LE-PK oversampling scheme in sensitivity of -75 dBm is 29 cm and 14 cm, respectively. The ML-PK scheme improves the ranging accuracy down to 9.7 mm.

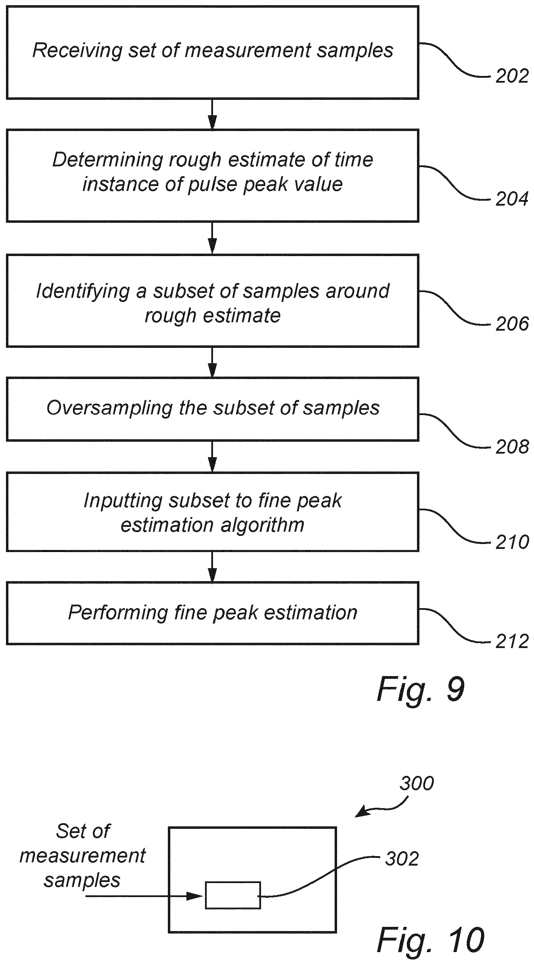

Referring now to Fig. 9, the method for determining a time duration for signal propagation between the first and the second radio signal transceiver 10, 12 in relation to determining a distance between the first and the second radio signal transceiver 10, 12 will be summarized.

The method comprises: receiving 202 a set of measurement samples defining a time sequence. The set of measurement samples is acquired by signal reception by the first radio signal transceiver 10. The set of measurement samples represents a time duration related to propagation of a signal between the second radio signal transceiver 12 and the first radio signal transceiver 10. As discussed above, the set of measurement samples may represent a round-trip time for signal propagation, or the set of measurement samples may represent signal propagation in only one direction. Also, measurements may be made for signals propagating with the first and second radio signal transceiver 10, 12 changing roles.

The method further comprises determining 204 a rough estimate of a time instance of a pulse peak value in the measurement samples. The rough estimate may be performed based on measurement samples that are processed to remove or at least reduce unknown phase offset from the set of measurement samples.

The method further comprises identifying 206 a subset of the set of measurement samples around the rough estimate of the time instance.

The method may optionally further comprise oversampling 208 the subset of measurement samples to generate an increased number of measurement samples in the subset.

The method further comprises inputting 210 the subset of measurement samples of the set to a fine peak estimation algorithm. The subset of measurement samples is processed to remove or at least reduce unknown phase offset from the subset of measurement samples. This may be ensured in that the set of measurement samples are processed to remove or at least reduce unknown phase offset before determining the rough estimate. Alternatively, the subset of measurement samples input to the oversampling may not be processed to reduce unknown phase offset and the subset of measurement samples may instead be processed to remove or at least reduce unknown phase offset before the subset of measurement samples is passed as the input to the fine peak estimation algorithm.

The method further comprises performing 212 fine peak estimation by the fine peak estimation algorithm, wherein the fine peak estimation algorithm uses an estimation of a shape of a pulse peak for determining a fine estimate of the time instance of the pulse peak value based on a statistical relation between samples of the subset of measurement samples.

Referring now to Fig. 10, a device 300 for determining a time duration for signal propagation between a first and a second radio signal transceiver 10, 12 in relation to determining a distance between the first and the second radio signal transceiver 10, 12.

The device 300 may be part of the first radio signal transceiver 10 or the second radio signal transceiver 12. However, the device 300 may alternatively be arranged external to the first and second radio signal transceivers 10, 12 and may be configured to receive the set of measurement samples from the first and/or second radio signal transceiver 10, 12.

The device 300 may for instance be part of the first radio signal transceiver 10, which is configured to receive the radio signal from the second radio signal transceiver 12 and which is further configured to generate a set of measurement samples based on the signal reception.

The device 300 further comprises a processing unit 302 configured to perform the method described above in relation to Fig. 9.

The processing unit 302 described above may be implemented as a general-purpose processing unit, such as a central processing unit (CPU), which may execute the instructions of one or more computer programs and to determine the time duration of signal propagation. Thus, a computer program product may be provided, which when executed, causes the processing unit 302 to perform the method. The computer program product may be provided as a signal carrying the computer program product for allowing the computer program product to be loaded into a memory accessible to the processor 302. According to an embodiment, the computer program product may be provided as a non-transient computer program product stored on any tangible media.

The processing unit 302 may alternatively be implemented as firmware arranged e.g., in an embedded system, or as a specifically designed processing unit, such as an Application-Specific Integrated Circuit (ASIC) or a Field-Programmable Gate Array (FPGA), which may be configured to implement functionality for determining the time duration of signal propagation.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1.  A method for determining a time duration for signal propagation between a first and a second radio signal transceiver (10, 12) in relation to determining a distance between the first and the second radio signal transceiver (10, 12), said method comprising:

    receiving (202) a set of measurement samples defining a time sequence, wherein the set of measurement samples is acquired by signal reception by the first radio signal transceiver (10), said set of measurement samples representing a time duration related to propagation of a signal between the second radio signal transceiver (12) and the first radio signal transceiver (10);
    determining (106; 204) a rough estimate of a time instance of a pulse peak value in the measurement samples;
    identifying (108; 206) a subset of the set of measurement samples around the rough estimate of the time instance;
    inputting (210) the subset of measurement samples of the set to a fine peak estimation algorithm, wherein the subset of measurement samples are processed to reduce unknown phase offset from the subset of measurement samples; and
    performing (114; 212) fine peak estimation by the fine peak estimation algorithm, wherein the fine peak estimation algorithm uses an estimation of a shape of a pulse peak for determining a fine estimate of the time instance of the pulse peak value based on a statistical relation between samples of the subset of measurement samples.

2.  The method according to claim 1, further comprising after identifying the subset of the set of measurement samples, oversampling (110; 208) the subset of measurement samples to generate an increased number of measurement samples in the subset.

3. The method according to claim 2, wherein said oversampling comprises performing a Fast Fourier Transform (FFT) on the subset of measurement samples to generate an FFT representation of the subset, zero padding of the FFT representation, and performing an inverse FFT to output an increased number of measurement samples of the subset.

4. The method according to claim 3, wherein an oversampling factor used in the zero padding is smaller than 10, such as smaller than 5, such as 2.

5. The method according to any one of the preceding claims, wherein the set of measurement samples are formed (102) based on a cross correlation between a received signal and a reference signal, wherein the set of measurement samples are processed (104; 112) based on an absolute value of the cross correlation for reducing the unknown phase offset.

6. The method according to claim 5, wherein the set of measurement samples are processed (112) based on the absolute value after identifying the subset of the set of measurement samples and before performing fine peak estimation.

7. The method according to claim 5, wherein the set of measurement samples are processed (104) based on the absolute value before identifying the subset of the set of measurement samples.

8. The method according to any one of claims 5-7, wherein a covariance of noise in the cross correlation between the received signal and the reference signal is approximated such that covariance of colored noise is independent on a transmitter pulse shape.

9. The method according to any one of the preceding claims, wherein a size of the subset of measurement samples is based on tradeoff between accurate finding of peak and processing complexity.

10. The method according to any one of the preceding claims, wherein the rough estimate of the time instance of a first pulse peak value is determined using a leading-edge algorithm based on detection of a non-first peak.

11. The method according to any one of claims 1-9, wherein the rough estimate of the time instance of the pulse peak value is determined based on identifying a pulse peak in the set of measurement samples.

12. The method according to any one of claims 1-9, wherein the measurement samples of the set of measurement samples correspond to combining measurement samples based on multiple receiver chains between the first radio signal transceiver and the second radio signal transceiver.

13. The method according to any one of the preceding claims, wherein the performing of the fine peak estimation uses a maximum likelihood estimation by maximizing a probability density function between the samples of the subset of measurement samples and the shape of the pulse peak.

14. A computer program product comprising computer-readable instructions such that when executed on a processing unit the computer program product will cause the processing unit to perform the method according to any one of the preceding claims.

15. A device for determining a time duration for signal propagation between a first and a second radio signal transceiver (10, 12) in relation to determining a distance between the first and the second radio signal transceiver (10, 12), said device (300) comprising a processing unit (302) configured to:

   receive a set of measurement samples defining a time sequence, wherein the set of measurement samples is acquired by signal reception by the first radio signal transceiver, said set of measurement samples representing a time duration related to propagation of a signal between the second radio signal transceiver and the first radio signal transceiver;
   determine a rough estimate of a time instance of a pulse peak value in the measurement samples;
   identify a subset of the set of measurement samples around the rough estimate of the time instance;
   input the subset of measurement samples of the set to a fine peak estimation algorithm, wherein the subset of measurement samples are processed to reduce unknown phase offset from the subset of measurement samples;

and

perform fine peak estimation by the fine peak estimation algorithm, wherein the fine peak estimation algorithm uses an estimation of a shape of a pulse peak for determining a fine estimate of the time instance of the pulse peak value based on a statistical relation between samples of the subset of measurement samples.

*Fig. 1*

Fig. 2

Fig. 3

Fig. 4

Fig. 5

EP 4 418 011 A1

Fig. 6

Fig. 7

Fig. 8

```
┌─────────────────────────────────────────┐
│   Receiving set of measurement samples   │ ── 202
└─────────────────────────────────────────┘
                    │
                    ▼
┌─────────────────────────────────────────┐
│    Determining rough estimate of time    │ ── 204
│     instance of pulse peak value         │
└─────────────────────────────────────────┘
                    │
                    ▼
┌─────────────────────────────────────────┐
│   Identifying a subset of samples around │ ── 206
│              rough estimate              │
└─────────────────────────────────────────┘
                    │
                    ▼
┌─────────────────────────────────────────┐
│      Oversampling the subset of samples  │ ── 208
└─────────────────────────────────────────┘
                    │
                    ▼
┌─────────────────────────────────────────┐
│      Inputting subset to fine peak       │ ── 210
│         estimation algorithm             │
└─────────────────────────────────────────┘
                    │
                    ▼
┌─────────────────────────────────────────┐
│      Performing fine peak estimation     │ ── 212
└─────────────────────────────────────────┘
```

Fig. 9

300

Set of
measurement
samples

302

Fig. 10

Europäisches
Patentamt

European
Patent Office

Office européen
des brevets

# EUROPEAN SEARCH REPORT

Application Number

EP 23 15 7507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 9 140 772 B1 (DEWBERRY BRANDON SCOTT [US] ET AL) 22 September 2015 (2015-09-22) <br> * figures 2A-6, 10, 12A, 12B * <br> * column 1, line 12 - line 16 * <br> * column 1, line 40 - line 61 * <br> * column 5, line 45 - column 8, line 21 * <br> * column 8, line 58 - column 10, line 49 * <br> ----- | 1-15 | INV. <br> G01S13/76 <br><br> ADD. <br> G01S7/292 <br> H04W56/00 |
| Y | US 8 116 350 B1 (ARNDT G DICKEY [US] ET AL) 14 February 2012 (2012-02-14) <br> * figure 6 * <br> * column 1, line 15 - line 20 * <br> * column 14, line 10 - column 15, line 42 * <br> ----- | 1-15 | |
| Y | DOGANCAY KUTLUYIL ET AL: "UWB precision geolocation using FFT interpolation", 2005 13TH EUROPEAN SIGNAL PROCESSING CONFERENCE, IEEE, 4 September 2005 (2005-09-04), pages 1-4, XP032759899, ISBN: 978-1-60423-821-1 [retrieved on 2015-04-01] <br> * figure 2 * <br> * page 2, column 2, paragraph 3 * <br> ----- | 2-4 | |
| Y | US 2021/088645 A1 (CASAMASSIMA FILIPPO [AT] ET AL) 25 March 2021 (2021-03-25) <br> * figure 2 * <br> * paragraph [0013] * <br> ----- | 12 | TECHNICAL FIELDS SEARCHED (IPC) <br><br> G01S |

The present search report has been drawn up for all claims

| Place of search | Date of completion of the search | Examiner |
|---|---|---|
| Munich | 20 July 2023 | Krummenacker, Benoit |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 7507

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2023

| Patent document cited in search report | | Publication date | Patent family member(s) | | Publication date |
|---|---|---|---|---|---|
| US 9140772 | B1 | 22-09-2015 | NONE | | |
| US 8116350 | B1 | 14-02-2012 | NONE | | |
| US 2021088645 | A1 | 25-03-2021 | CN | 112630725 A | 09-04-2021 |
| | | | EP | 3799319 A1 | 31-03-2021 |
| | | | US | 2021088645 A1 | 25-03-2021 |

EPO FORM P0459

For more details about this annex : see Official Journal of the European Patent Office, No. 12/82